Europäisches Patentamt

European Patent Office

Office européen des brevets

(19)

(11) Publication number: **0 134 159**
A2

## EUROPEAN PATENT APPLICATION

(21) Application number: 84305772.0

(22) Date of filing: 23.08.84

(51) Int. Cl.⁴: **E 06 B 3/62, B 60 R 13/06**

(30) Priority: 24.08.83 US 526048

(43) Date of publication of application: 13.03.85
Bulletin 85/11

(84) Designated Contracting States: DE FR GB IT SE

(71) Applicant: SCHLEGEL CORPORATION, 400 East
Avenue, Rochester, New York 14607 (US)

(72) Inventor: Massey, Philip Leonard, Box 420 Route 10,
Maryville Tennessee 37801 (US)
Inventor: McManus, Michael John, Box 345 Route 15,
Maryville Tennessee 37801 (US)
Inventor: Walker, Ted Lynn, 1010 Sunset Drive, Maryville
Tennessee 37801 (US)

(74) Representative: Carpmael, John William Maurice,
CARPMAELS & RANSFORD 43 Bloomsbury Square,
London, WC1A 2RA (GB)

(54) An improved edge protector weatherstrip.

(57) An edge protector weatherstrip is disclosed having improved flange retention characteristics and including an elastomer material (30) such as a polymeric compound secured to a surface or surfaces of the weatherstrip which are adjacent to or engageable with an edge flange (16) when the weatherstrip is assembled thereon. The compound is soft, solid and tacky within a range of temperatures between at least —34°C and 260°C and greatly increases the retention force between the edge flange (16) and weatherstrip (12) and further provides a water barrier to prevent water seepage around the flange (16).

EP 0 134 159 A2

AN IMPROVED EDGE PROTECTOR  WEATHERSTRIP

BACKGROUND OF THE INVENTION

Field of the Invention

The present invention relates generally to weatherstrips, and more specifically to an improved channel-shaped weatherstrip for covering edge flanges surrounding an opening in a vehicle body, and gripping the edge flanges with a greatly increased retention force.

Description of the Prior Art

Channel-shaped edge protector weatherstrips for gripping and covering edge flanges surrounding an opening in a vehicle body, for example, are well known in the art, of which U.S.Patent No.4,278,487 is exemplary. Such weatherstrips preferably have flange engaging fins of a desired slanted configuration to facilitate applying a weatherstrip onto a flange with a low insertion force, preferably under five pounds. The weatherstrips have a higher removal or extraction force.

It is known in the prior art to increase the weatherstrip extraction force by use of a solvent lubricant as disclosed in U.S.Patent No.4,278,487. The solvent lubricant reduces the weatherstrip insertion force, and then softens a portion of the flange engaging surface of the weatherstrip such that the flange and flange engaging surface enter into an intimate and possibly adhesive engagement with the flange. This intimate and adhesive engagement with the flange increases the force required to remove the weatherstrip from the flange.

It is further known in the art, of which U.S.Patent No.3,091,821 is exemplary, to provide a channel-shaped weatherstrip with a bead of mastic, such as asphalt, on the inside bottom or bight surface of the weatherstrip. The weatherstrip is further provided with bands of latex sprinkled with gritty material on the inside surfaces of the legs of the weatherstrip for increasing the gripping force between the edge flange and weatherstrip, and hence increasing the removal force required to remove the weatherstrip from the flange.

U.S.Patent Nos.2,928,201 and 4,372,083 disclose channel-shaped edge protector trim strips having beads of a tacky deformable adhesive, such as cellulose and polyvinyl butyral based adhesives, and beads of a hot melt, pressure sensitive adhesive respectively placed on the flange engaging surfaces of the weatherstrip. In U.S.Patent No.2,928,201, the butyral adhesive beads are placed on the inner surfaces of the legs of the weatherstrip. In U.S.Patent No.4,372,083, the hot melt bead is placed on the inside bottom or bight surface of the weatherstrip.

It is also known in the art to insert or lay a sponge-rubber cord along the inside bottom or bight of the channel-shaped weatherstrip to seat the flange, and to prevent water leakage around the flange by capillary action.

Although the prior art use of mastics and hot melt adhesive, for example, have improved the flange retention characteristics of weatherstrips, some problems have also developed with its use. For example, some of the mastics and adhesives soften or liquify in hot weather between around 90°C (190°F) to 160°C (320°F), and "leak out" into the car and trunk area where it sticks to the contents of the car and trunk, such as the upholstery, luggage, clothing, etc. Also, the mastic has the tendency of sticking to persons and clothes during handling of the material in weatherstrip manufacturing and assembly facilities. In addition, during the weatherstrip manufacturing process, the material has to be pumped onto the weatherstrip, and the pump output must flow consistently relative to the extruding speed of the weatherstrip. This is often difficult to achieve.

Another disadvantage of the use of prior art adhesive is that to increase the retention force of the weatherstrip on the flange to a desired value, it has been necessary to increase the clamping force of the weatherstrip. This has been achieved in the past by changing the resilient steel insert or carrier of the weatherstrip to increase the force with which the legs of the weatherstrip engage the edge flange. This, in turn, increases the insertion force required to assemble the weatherstrip onto an edge flange to an excessive value. To facilitate assembly of such weatherstrips, it is necessary to reduce the excessive insertion force required. This has been achieved in the vehicle industry by treating the edge flange with a lubricant before the weaterstrip is applied to the edge flange. The lubricant has a relatively long evaporation time which detracts from the reliability of strip retention in the early period of the vehicle's working life. Also, the adhesive and lubricant, when dried, are visible on the vehicle bodywork laterially of the weatherstrip and mar the appearance of the bodywork.

## SUMMARY OF THE INVENTION

In accordance with a preferred embodiment of this invention, there is provided an improved channel-shaped weatherstrip that can be assembled onto an edge flange with a low application force, and once assembled has a high retention force, that is, cannot be removed from the edge flange without the application of a high removal or "pull-off" force. The improved weatherstrip comprises a conventional channel-shaped body member having surfaces in engagement with or adjacent to an edge flange when assembled thereon, and a layer of elastomeric material secured to at least a portion of the surfaces. The elastomeric material is a conventional polymeric material, such as a butyl rubber base product, that is soft, solid and tacky within a temperature range between at least $-34^{\circ}C$ ($-30^{\circ}F$) to $260^{\circ}C$ ($500^{\circ}F$).

The invention and its advantages will become more apparent from the detailed description of the invention presented below.

## BRIEF DESCRIPTION OF THE DRAWINGS

The details of the invention will be described in connection with the accompanying drawings, in which:

Fig. 1 is a section view of a preferred embodiment of the improved edge protector weatherstrip of this invention assembled on an edge flange; and

Figs. 2-5 are section views of other preferred embodiments of edge protector weatherstrips of this invention with the edge flanges and tubular sealing bulbs omitted for purposes of clarity.

## DETAILED DESCRIPTION OF THE INVENTION

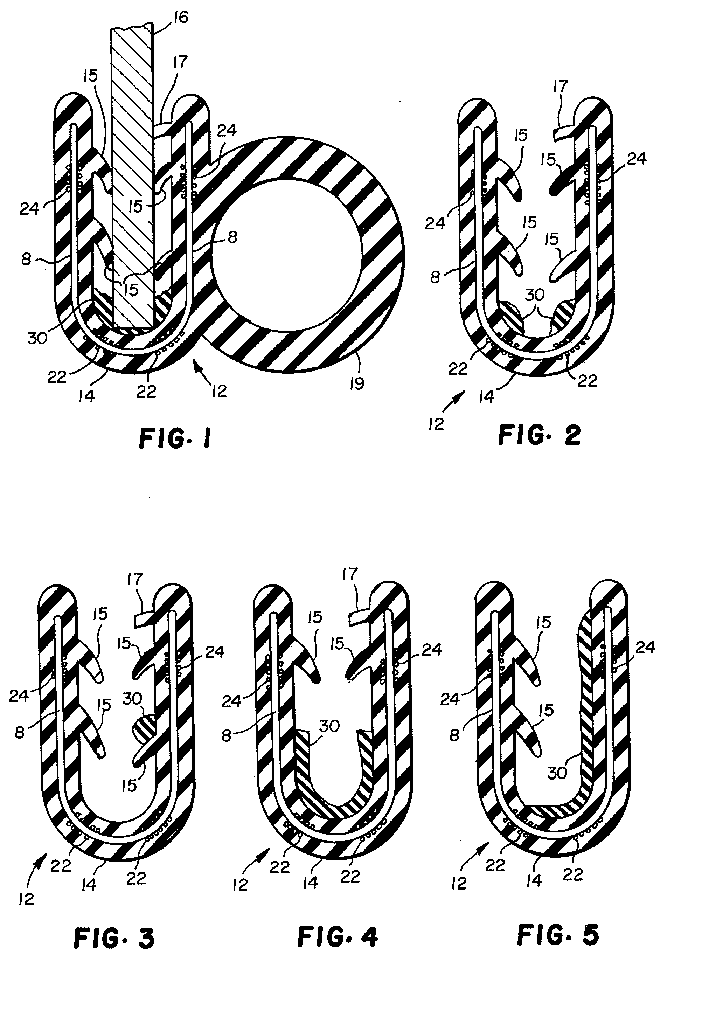

With reference to Fig. 1, a preferred embodiment of an improved edge protector weatherstrip 12 of this invention is disclosed. The weatherstrip 12 comprises a conventional channel-shaped body member having a wire carrier 8 formed from a wire arranged in a serpentine or looped path. The wire carrier 8 is coated with any suitable elastomeric material 14 such as polyvinyl chloride or a natural or synthetic rubber, for example. During the coating operation, the elastomeric material 14 is extruded onto wire carrier 8, and the hydraulic forces generated during the extruding operation tend to longitudinally displace looped portions of the wire carrier. To prevent longitudinal displacement of the looped portions during the extruding operation, the looped portions are stayed or maintained in their spaced relation with one another by strands 22, 24 of a reinforcing material. The strands of reinforcing material are formed of polyester, cotton, nylon, rayon, fiberglass or light wire, and are interwoven with the looped portions in a manner well known in the art. The weatherstrip 12 further has a plurality of fins 15 integral with the body member along the two inside facing walls of the legs thereof for gripping an edge flange 16. Weatherstrip 12 also has a sealing lip 17 on one leg, and a tubular sealing bulb 19 secured to the same leg.

To prevent water leakage by capillary action around edge flange 16 into a vehicle, and to greatly increase the retention or gripping force of weatherstrip 12 on the edge flange when assembled thereon, a polymeric compound 30 is extruded onto a portion of the surface of the body member adjacent to or engagable with an edge flange of the weatherstrip. The polymeric compound 30 is a butyl rubber base compound containing 100 parts of cross-linked butyl rubber and 168 parts of other materials, such as resin and carbon black for a total of 268 parts. The polymeric compound 30 is manufactured by Polysar of Sarnia, Ontario, Canada as their designated part No. 82KS529. The polymeric compound is a viscous solid, and is soft and tacky within a tested temperature range from approximately -34°C (-30°F) to 260°C (500°F). The viscous solid polymeric compound 30 is extrudable at approximately 65°C (150°F) through conventional rubber or plastic extrusion equipment onto the inner closed end or bight of the weatherstrip (Fig. 1), preferably at the same time that the weatherstrip is extruded. The polymeric compound will adhere to rubber, plastic, metals, glass and many other materials.

The polymeric compound 30 can be vulcanized by subjecting the compound to a temperature of approximately 240°C (460°F) for about 1.25 minutes by any suitable means such as hot air, ultra high frequency, or salt bath, for example. The compound 30 will vulcanize by itself over a long period of time when assembled on a car, for example, as a result of the temperature of its environment. The vulcanization by whatever means increases the gripping strength of the polymeric compound.

According to standards established for weatherstripping by the auto industry, the force required to insert or assemble a weatherstrip 12 onto an edge flange 16 should not exceed 1.35 kgs (3 lbs.), and the minimum force to remove or "pull-off" the weatherstrip should not be below 2.25 kgs (5 lbs.). With the improved weatherstrip 12 of this invention, the force of insertion is below the 1.35 kg maximum limit, and the force required to remove or "pull-off" the weatherstrip is around 9 kgs (20 lbs.), far in excess of the minimum removal force of 2.25 kgs (5 lbs.).

With reference to Figs. 2-5, the weatherstrip 12 of Fig. 1 is shown with the edge flange 16 and sealing bulb 19 omitted for purposes of clarity. In these views, alternate locations of the polymeric compound 30 are illustrated other than at the inner bottom or bight at the closed end of the

0134159

weatherstrip as illustrated in Fig. 1. In Fig. 2, two separate beads of polymeric compound 30 are extruded at the bight of the weatherstrip. In Fig. 3, a bead of polymeric compound 30 is extruded anywhere between fins 15, preferably on the leg of the weatherstrip to which sealing bulb 19 is secured. During assembly of the weatherstrip onto an edge flange 16 of a vehicle door, fins 15 tend to prevent contact between the flange and polymeric compound 30 so that the insertion force is below the allowed maximum limit. However, when the vehicle door is closed, sealing bulb 19 and fins 15 are compressed causing the polymeric compound 30 to firmly engage and grip the flange. In Fig. 4, lower fins 15 are removed, and a layer of polymeric compound 30 is extruded over the inner closed end or bight of weatherstrip 12. In Fig. 5, fins 15 on the leg to which sealing bulb 19 is secured are removed and a layer of polymeric compound 30 is extruded onto the bight and leg of the weatherstrip. Again, initial closure of the vehicle door will force the leg and compound 30 firmly into engagement with edge flange 16.

While a presently preferred embodiment of the invention has been shown and described with particularity, it will be appreciated that various changes and modifications may suggest themselves to one having ordinary skill in the art upon being apprised of the present invention. It is intended to encompass all such changes and modifications as fall within the scope and spirit of the appended claims.

CLAIMS:

1.      A channel-shaped weatherstrip (12) adapted to be mounted onto an edge flange (16) comprising a channel-shaped body member having surfaces adjacent to or engageable with an edge flange when the weatherstrip is assembled thereon, characterised in that a layer of elastomeric material (30) is secured to at least a portion of said surfaces of said body member, said layer being soft, solid and tacky within a temperature range between at least -34°C to 260°C whereby said tacky elastomeric material adheres to the edge flange (16) and greatly improves the retention force between the edge flange (16) and weatherstrip (12) when the weatherstrip (12) is assembled onto the edge flange (16) and further prevents water seepage around the edge flange (16).

2.      A channel-shaped weatherstrip according to claim 1 characterised in that said channel-shaped body member has a closed end (14), and in that said surfaces of said channel-shaped body member comprise gripping fins (15) integral with said body member along the two inside facing walls of said body member and projecting toward each other, and in that said layer of elastomeric material is interposed between said fins and said closed end of said channel-shaped body member.

3.      A channel-shaped weatherstrip according to claim 1 characterised in that said channel-shaped body member has a closed end (14), and in that said surfaces of said body member comprise spaced gripping fins (15) integral with said body member along the two inside facing walls of said body member and projecting toward each other, and in that said layer of elastomeric material (30) is interposed between said spaced fins (15) on at least one of said walls.

4.      A channel-shaped weatherstrip according to claim 1 characterised in that said channel-shaped body member has a closed end (14) and in that said surfaces of said body member comprise spaced gripping fins integral with said body member along only one inside wall of said body member (Fig.5), and in that said layer of elastomeric material (30) is placed on the opposite inside wall facing said one wall.

5. A channel-shaped weatherstrip according to claim 1 characterised in that said channel-shaped body member has a closed end (14), and in that said surfaces of said body member comprise spaced gripping fins integral with said body member along only one inside wall of said body member and in that said layer of elastomeric material (30) is in the form of two beads adjacent said closed end (14).

6. A channel-shaped weatherstrip according to any of claims 1-5 characterised in that said layer of elastomeric material comprises a polymeric material.

7. A channel-shaped weatherstrip according to claim 6 characterised in that said polymeric material comprises a butyl rubber base product.

FIG. 1

FIG. 2

FIG. 3

FIG. 4

FIG. 5